# FASCICULE DE BREVET EUROPEEN

(11) **EP 1 201 826 B1**
(45) Date de publication et mention de la délivrance du brevet: **26.05.2004**
(21) Numéro de dépôt: 01420213.9
(22) Date de dépôt: 24.10.2001
(51) Int. Cl.: E01B 29/28, B23P 19/06

(54) **Machine de vissage ou de dévissage de boulons ou de tire-fond pour attaches vissées de voies ferrées**
Maschine zum Einschrauben oder Ausschrauben der Bolzen bzw. der Schienenschrauben von geschraubten Klemmeinrichtungen von Eisenbahngleisen
Apparatus for screwing or unscrewing the bolts or sleeper-screws of railway track screwed fasteners

(30) Priorité: 26.10.2000 FR 0013762
(43) Date de publication de la demande: 02.05.2002
(73) Titulaire: SOCIETE TURRIPINOISE DE MECANIQUE SA, 38110 Saint Didier de la Tour (FR)
(72) Inventeur: Huboud-Peron, Maurice, 38110 La Tour du Pin (FR)
(74) Mandataire: Maureau, Philippe

(56) Documents cités:
- FR-A- 1 206 323
- US-A- 3 628 461
- PATENT ABSTRACTS OF JAPAN vol. 1999, no. 08, 30 juin 1999 (1999-06-30) & JP 11 061706 A (TAKASHIMA AKIYASU), 5 mars 1999 (1999-03-05)

## Description

La présente invention a pour objet une machine de vissage ou de dévissage de boulons ou de tire-fond pour attaches vissées de voies ferrées.

Les rails des voies ferrées reposent sur des traverses sur lesquelles ils sont fixés par des attaches. Un rail de voie ferrée présentant, vue en coupe transversale, une partie inférieure élargie constituée par deux patins disposés de part et d'autre de la partie centrale du rail et prenant appui sur les traverses, des attaches prennent appui sur les patins disposés de part et d'autre de la partie centrale de celui-ci. Ces attaches sont fixées sur les traverses supportant les rails par l'intermédiaire de tire-fond ou par des écrous engagés sur des tiges filetées, préalablement rendues solidaires des traverses, et sur lesquelles sont engagées les attaches.

Il s'agit d'appliquer un couple de serrage adéquat sur les attaches, pour assurer une bonne tenue du rail, sans que ce couple soit trop élevé, ni trop faible, car un couple inadéquat conduit tout d'abord à une baisse d'efficacité de l'attache, puis à une destruction de cette dernière, voire à une déstabilisation de la voie.

Pour réaliser le vissage de boulons ou de tire-fond de fixations des attaches de voies ferrées, il est connu d'utiliser des machines entraînant, à partir d'un moteur thermique ou autre, une douille venant s'engager sur la tête du boulon ou du tire-fond.

Une telle machine est connue, par exemple, par les documents EP 0 169 753 et FR 2 745 216, au nom de la Demanderesse.

La machine la plus simple dans sa structure comprend une clé destinée à assurer l'actionnement d'un seul boulon à la fois. Une telle machine roule sur le rail à fixer, et est manipulée à la main par un opérateur.

Il est également connu de réaliser des machines comportant deux douilles permettant de réaliser simultanément la fixation de deux attaches disposées de part et d'autre d'un même rail. Dans ce cas, l'appareil est également déplacé manuellement par l'opérateur sur un rail, et l'alignement des douilles avec les écrous ou têtes de tire-fond à actionner résulte de ce déplacement et du positionnement manuel par l'opérateur.

L'invention concerne une machine de vissage ou de dévissage de boulons ou de tire-fond pour attaches vissées de voies ferrées, qui comporte quatre têtes destinées à actionner simultanément les quatre tire-fond ou boulons de fixation de quatre attaches d'un rail sur une même traverse.

Une telle machine est bien trop lourde pour être manoeuvrée d'une traverse à l'autre par la simple force musculaire d'un opérateur. Il convient donc de la doter d'un système auto-moteur. Lorsqu'une machine est utilisée manuellement, l'opérateur vient coiffer le boulon ou le tire-fond avec la clé de la tête de serrage, ce qui nécessite une combinaison de plusieurs mouvements. Cette combinaison est difficile à mettre en oeuvre lorsque la machine doit se déplacer d'elle-même. D'autres difficultés s'y ajoutent. Une machine à quatre têtes étant destinée à serrer simultanément les quatre attaches d'une même traverse, il faut réaliser cette opération rapidement, bien que les traverses ne soient généralement pas parfaitement d'équerre par rapport au rail, que leur espacement n'est pas parfaitement régulier, pouvant varier de quelques centimètres, et qu'elles sont, pour certaines, à plusieurs centimètres en dessous de leur niveau final.

Il existe des machines faisant appel à des cellules qui détectent de façon optique, magnétique ou par laser, les attaches à visser pour assurer le positionnement de chaque tête par rapport à un écrou ou à un tire-fond. Bien que le principe soit théoriquement séduisant, sa mise en oeuvre et les conditions matérielles de conduite d'un chantier amènent à de nombreux déboires : vibrations, chocs pendant les transports ou en période de travail, car la position des capteurs les placent en des lieux très exposés, erreurs de lecture car les éléments à détecter sont exposés aux intempéries.

Le document FR-A-1 206 323 décrit une machine comportant un châssis auto-moteur équipé de deux groupes de deux têtes de vissage montés déplaçables verticalement, l'écartement des deux têtes d'un groupe pouvant être réglé. Chaque tête comporte une clé d'engagement sur un tire-fond.

L'invention concerne une machine de vissage ou de dévissage de boulons ou de tire-fond pour attaches vissées de voies ferrées, comportant quatre têtes de vissage destinées à actionner simultanément les quatre boulons ou les quatre tire-fond destinés à assurer la fixation d'un rail sur une traverse, comprenant un châssis doté d'un dispositif auto-moteur et équipé de galets prenant appui sur les deux rails de la voie ferrée, deux groupes de deux têtes de vissage étant montés déplaçables verticalement sur le châssis, l'écartement de deux têtes d'un groupe pouvant être réglé, et chaque tête de vissage comportant une clé d'engagement sur un boulon ou un tire-fond. Le but de l'invention est de réaliser une machine de structure simple, qui procède à un positionnement automatique des têtes vis-à-vis des boulons, et qui bénéficie d'une grande fiabilité. A cet effet, le dispositif auto-moteur assure un déplacement séquentiel du châssis d'une valeur correspondant à l'écartement nominal entre les traverses, chacun des galets équipant ledit châssis étant muni d'un bandage réalisé en un matériau évitant le patinage et le glissement dudit galet sur le rail qui lui sert d'appui, chaque groupe de deux têtes de vissage est monté avec possibilité de déplacement longitudinal sur le châssis, et chaque clé est montée de façon inclinable par rapport à l'axe de la tête.

La machine se déplace d'une valeur correspondant à l'écartement entre deux traverses, l'arrêt de la machine dépendant de la distance parcourue, qui est prédéterminée et réglable, et non pas de la recherche à l'aide de capteurs d'un positionnement vis-à-vis des boulons ou des tire-fond à actionner. Si certaines des têtes de vissage ne sont pas parfaitement en regard des boulons correspondants, la possibilité d'inclinaison des clés correspondantes permet leur engagement sur les boulons. Lors de l'entraînement des clés en rotation, la contrainte exercée sur les axes entraînant les clés va se traduire par un réalignement de la clé avec la tête de vissage correspondante, grâce à la possibilité de déplacement longitudinal sur le châssis du groupe de têtes de vissage considéré.

Suivant une forme d'exécution de cette machine, le châssis comporte quatre galets, munis chacun d'un bandage réalisé dans un matériau par exemple à base de caoutchouc, entraînés à partir d'un moteur thermique, un capteur constitué par un compteur d'impulsions étant prévu à l'intérieur de la machine, qui arrête la machine lorsque celle-ci s'est déplacée d'une distance déterminée.

Avantageusement, la valeur du déplacement de la machine entre deux cycles de serrage de boulons est réglable à l'aide d'une télécommande actionnable par l'opérateur.

Cette machine se déplace selon des séquences "carrées", c'est-à-dire sans patinage, ni glissement. La valeur du déplacement est calculée par le capteur, à l'abri à l'intérieur de la machine et non accessible directement par l'opérateur, mais seulement par une télécommande actionnable par l'opérateur. Le déplacement de la machine bien que s'effectuant suivant un pas prédéterminé est néanmoins approprié grâce à l'amplitude de mouvement de chaque clé qui, lorsqu'elle n'est pas exactement en face du boulon quand la machine s'arrête, peut cependant coiffer celui-ci tant que son centre est situé dans un cercle inférieur ou égal à 5 cm autour du centre de l'arbre d'entraînement de cette clé. Le montage flottant des groupes de têtes permet de recentrer la machine pendant que le vissage ou le dévissage se réalise, afin de compléter et prolonger sans heurts le mouvement de la clé.

Afin de permettre l'amplitude d'accostage d'une clé, chaque tête de vissage comprend une clé dont l'ouverture présente une entrée conique et est montée sur l'arbre d'entraînement correspondant, par l'intermédiaire d'un dispositif à rotule.

Afin de permettre le montage flottant des têtes de vissage, chaque groupe de deux têtes de vissage est monté sur un bâti, lui-même monté coulissant longitudinalement sur le châssis de la machine.

Suivant une caractéristique de l'invention, au moins un des groupes de têtes de vissage est maintenu auto-centré longitudinalement sous l'action de deux ressorts antagonistes agissant chacun entre le châssis de la machine et le bâti porteur d'un groupe de têtes de vissage.

Les deux ressorts maintiennent l'ensemble du groupe de têtes dans une position centrale tout en autorisant un léger déplacement. Il existe une force de rappel dès qu'un effort tend à déplacer le groupe de deux têtes.

Lorsque l'accostage d'un boulon ou d'un tire-fond par une clé dans un rayon de 5 cm environ est réussi, après descente verticale du groupe de deux têtes, le travail proprement dit, par exemple de vissage, commence. Plus le couple appliqué au boulon augmente, plus le degré de liberté offert par la rotule tend à diminuer, car il y a une tendance au "raidissement" de l'articulation, cette tendance tendant à rendre coaxiales toutes les pièces en mouvement. Le bâti portant le groupe de deux têtes étant laissé libre tant que l'opération est en cours, le dispositif d'auto-centrage qui avait permis au début de coiffer un boulon excentré permet ensuite, pendant le vissage, de recentrer les têtes et la machine complète. En avantage additionnel de ce recentrage automatique, il y a le fait que, pour son prochain déplacement vers la traverse suivante, la machine possède une bonne référence de départ puisqu'elle a été recentrée.

Suivant une autre caractéristique de l'invention, au moins un des groupes de têtes de vissage est associé à un vérin hydraulique monté entre le châssis de la machine et le bâti porteur d'un groupe de têtes de vissage, ce vérin étant équipé d'un distributeur à centre ouvert le laissant libre en conditions normales d'utilisation de la machine, et pouvant commander l'alimentation en fluide hydraulique de l'une ou l'autre des deux chambres pour réaliser le positionnement longitudinal du groupe de têtes de vissage, sur initiative de l'opérateur, si les têtes sont trop décalées par rapport aux écrous à serrer.

Comme indiqué précédemment, la machine est programmée pour parcourir une certaine distance, déterminée par un nombre d'impulsions comptées par le calculateur. S'il arrive qu'une traverse soit trop décalée par rapport à la norme, l'opérateur actionne le vérin, par une télécommande électrique pour ramener le groupe de deux têtes en face des boulons correspondants. Ce groupe ayant une masse sensiblement inférieure à celle de la machine, cet ajustement est bien plus rapide que s'il fallait déplacer toute la machine.

Pendant la phase de vissage ou de dévissage, le vérin hydraulique est libre grâce au distributeur à centre ouvert.

Si la machine est équipée d'un côté d'un groupe de têtes de vissage maintenu autocentré à l'aide de ressorts, et de l'autre côté d'un groupe de têtes de vissage associé à un vérin hydraulique de positionnement, le groupe de deux têtes associé à des ressorts retombe en position grâce aux ressorts antagonistes ainsi qu'expliqué précédemment, après que le premier groupe associé à un vérin ait été réglé.

En fin de travail, au moment où les groupes portant les têtes de vissage remontent, le vérin hydraulique ramène le groupe qui lui est associé, par un automatisme électro-hydraulique, en position centrale.

Suivant une caractéristique additionnelle, cette machine comporte en outre un chariot, solidaire du châssis de la machine et disposé en avant de celui-ci, équipé de moyens de positionnement avec précision, des traverses sur lesquelles les rails doivent être fixés.

Suivant une possibilité, les moyens de positionnement des traverses sont constitués par des pinces et/ou des leviers actionnés hydrauliquement permettant de pousser ou de tirer la traverse située sous le chariot. Il faut en effet pouvoir, si besoin est, déplacer la traverse soit parallèlement à elle-même si elle est déjà d'équerre par rapport au rail, soit plus d'un côté que de l'autre en cas de mauvais équerrage.

Afin d'éviter de déplacer l'ensemble de la machine vis-à-vis des rails au cours de ce positionnement, le chariot comporte des moyens de bridage sur les rails, pendant le repositionnement d'une traverse.

De toute façon, l'invention sera bien comprise, en référence au dessin schématique annexé représentant, à titre d'exemple non limitatif, une forme d'exécution de cette machine :
Figure 1 en est une vue en perspective ;

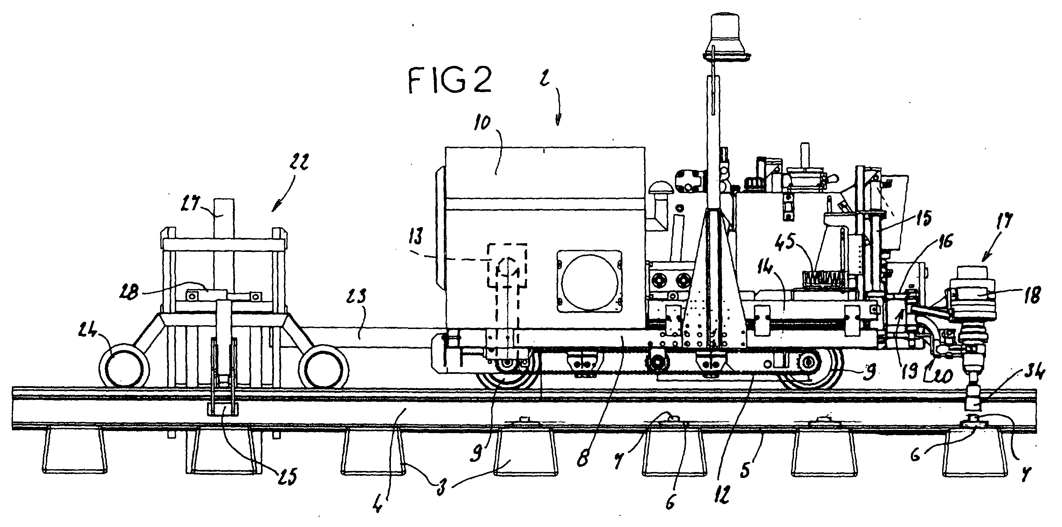

Figure 2 en est une vue de côté;
Figures 3 et 4 sont deux vues en perspective des deux blocs portant les deux têtes de vissage;
Figure 5 est une vue très schématique de dessus de la partie de la machine comportant les deux blocs équipés des têtes de vissage ;

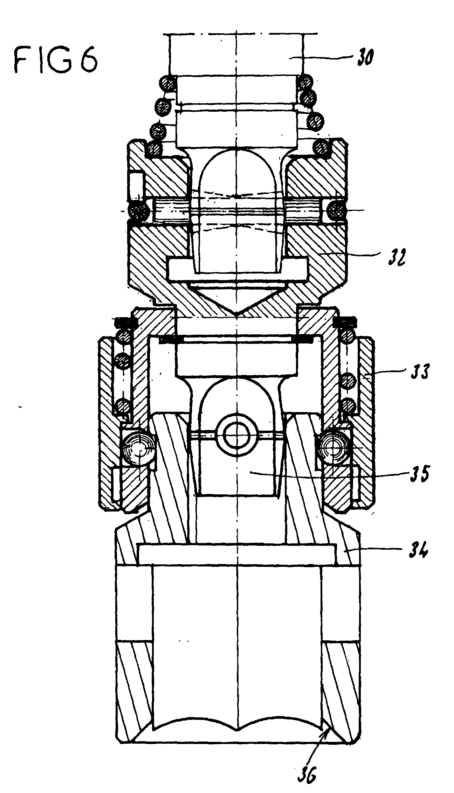

Figure 6 est une vue en coupe longitudinale d'une tête de vissage.

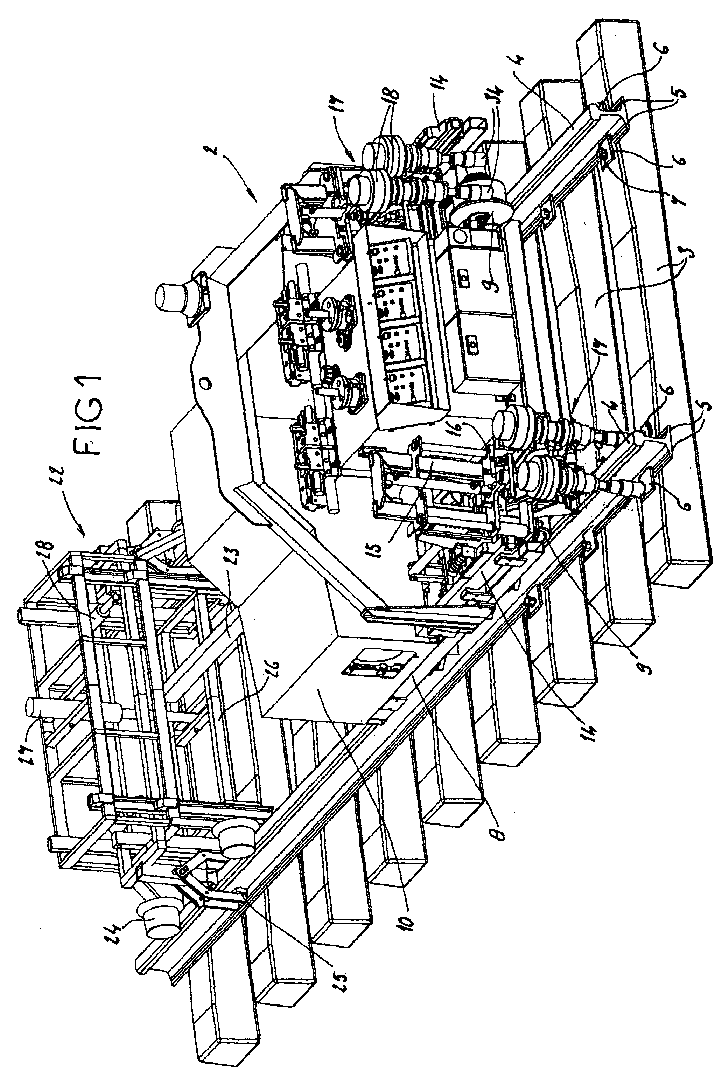

La figure 1 du dessin schématique annexé représente une vue d'ensemble de la machine désignée par la référence générale 2. Cette vue montre un certain nombre de traverses de chemin de fer 3, sur lesquelles reposent des rails 4 devant être fixés sur les traverses. Chaque rail 4 comporte deux ailes inférieures 5 prenant appui sur une traverse, et permettant la fixation sur celle-ci par deux attaches 6, dont une partie prend appui sur une aile et dont l'autre partie prend appui sur la traverse avec fixation par l'intermédiaire d'un tire-fond ou d'un boulon 7.

La machine représentée au dessin comprend un châssis 8 comportant quatre roues 9 munies chacune d'un bandage élastique, destiné à prendre appui sur les rails 4. Le châssis de la machine comprend un moteur thermique non représenté au dessin et recouvert par un capot 10, destiné à entraîner par l'intermédiaire de chaînes 12 les quatre roues 9. La machine 2 avance par pas d'une valeur correspondant à l'entraxe nominal entre deux traverses 3, ce déplacement étant mesuré de façon précise à l'aide d'un compteur d'impulsions 13 qui compte le nombre de tours de l'arbre moteur et qui arrête le moteur lorsqu'un nombre prédéterminé et réglable est atteint.

Compte tenu des bandages élastiques des roues 9, ce déplacement est effectué de façon précise, sans patinage au démarrage, ni glissement à l'arrêt. L'une des extrémités de la machine est équipée de deux bâtis 14, situés chacun au-dessus de l'un des deux rails 4. Sur chaque bâti 14 sont montés des colonnes verticales 15 permettant le déplacement vertical d'un support 16 portant un groupe 17 de deux têtes 18 de serrage ou de desserrage.

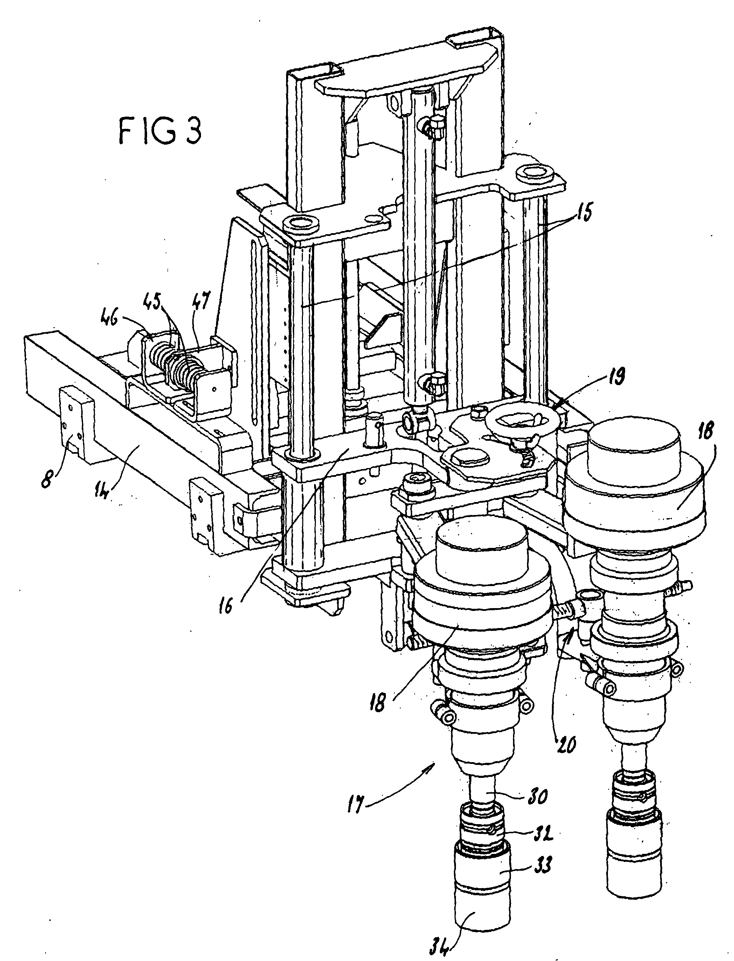

Comme montré notamment à la figure 3, chaque groupe 17 de deux têtes 18 de serrage ou de desserrage peut être déplacé longitudinalement par un dispositif 19. Cela permet de régler le positionnement entre les deux têtes 18 pour s'adapter à la configuration de la traverse. Il existe également un dispositif 20 permettant de régler l'écartement entre les deux têtes de serrage 18 d'un même groupe 17, pour s'adapter notamment au type d'attache qu'il convient de serrer ou de desserrer. Le châssis de la machine est dimensionné en fonction de l'écartement de la voie. L'inclinaison des têtes de serrage peut être réglée à l'aide de cales pour correspondre à l'inclinaison de pose des rails.

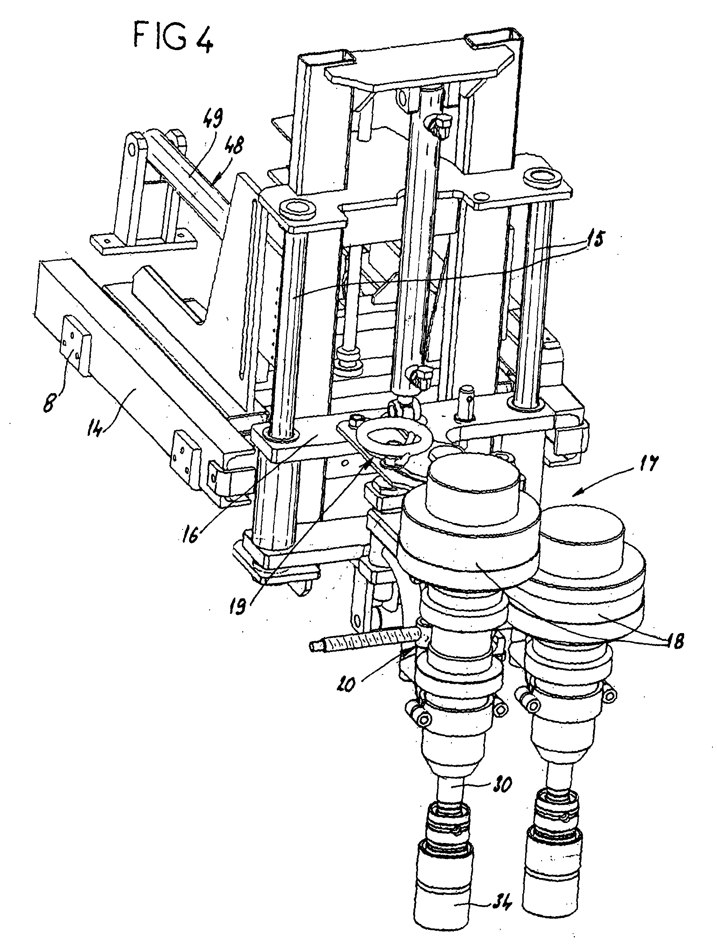

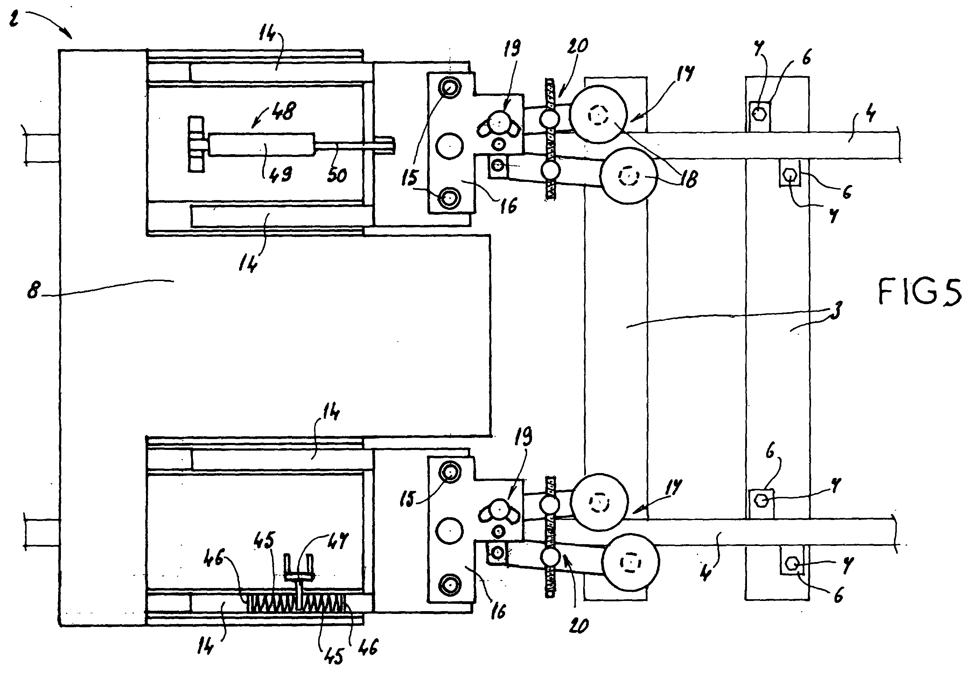

Les différentes têtes 18 de serrage et de desserrage sont actionnées par des moteurs hydrauliques, de façon connue en soi. Chaque bâti 14 est monté coulissant longitudinalement sur le châssis 8. D'un côté de la machine, qui est le côté gauche lorsque la machine est vue de l'arrière, et comme montré à la figure 3, le bâti 14 est maintenu de façon élastique dans une position intermédiaire de coulissement par rapport au châssis 8, sous l'action antagoniste de deux ressorts 45 prenant appui chacun sur une patte 46 solidaire du bâti 14 et sur une patte 47 solidaire du châssis 8. De l'autre côté de la machine, c'est-à-dire le côté droit sur la figure 1, et comme montré plus spécialement aux figures 4 et 5, le bâti 14 peut être déplacé par rapport au châssis 8 par l'intermédiaire d'un vérin hydraulique 48 dont le corps 49 prend appui sur le châssis 8 et dont l'extrémité de la tige 50 prend appui contre une pièce solidaire du bâti 14. Le vérin 48 est associé à un distributeur à centre ouvert, permettant la mise en communication des deux chambres situées de part et d'autre du piston et assurant une libre possibilité de déplacement du bâti 14 par rapport au châssis 8, en période de serrage ou de desserrage des écrous.

La machine comprend enfin, en avant dans le sens de son déplacement, un chariot 22 solidaire du châssis 8 par un bras rigide 23, et monté déplaçable sur les rails 4 par l'intermédiaire de roues 24. Ce chariot est muni de deux pinces 25 permettant son immobilisation sur les rails lorsqu'une traverse doit être positionnée avec précision. Ce positionnement est réalisé, après arrêt de la machine et bridage du chariot sur les rails, par l'intermédiaire de leviers 26 actionnés par des vérins 27, 28. Ce chariot peut permettre de positionner précisément une traverse en la déplaçant parallèlement à elle-même, ou en déplaçant davantage un bord que l'autre, en cas de mauvais équerrage.

L'emmanchement de l'arbre 30 dans la rallonge 32 de même que celui de la rallonge 32 dans la clé 34 sont à section carrée à flancs parallèles pour les parties femelles et à section carrée en forme de tonneau pour les parties mâles, procurant ainsi un effet de rotule. La clé 34 comporte en outre, du côté de son extrémité libre, une entrée conique 36.

Le fonctionnement de la machine est décrit, ci-après, de façon succincte, en faisant abstraction du positionnement précis des traverses par l'intermédiaire du chariot 22.

Il est tout d'abord procédé au réglage du positionnement des groupes de têtes 17 en agissant sur les dispositifs 19 pour adapter les groupes de têtes de serrage à la configuration de la voie. Il est ensuite procédé au réglage de l'écartement entre deux têtes de serrage 18 appartenant à un même groupe 17.

Chaque tête de serrage 18 comprend un arbre d'entraînement 30 en bout duquel est montée une rallonge 32 mâle-femelle équipée du dispositif de fixation rapide 33 d'une clé 34.

La machine, étant en position de démarrage, avance d'une distance correspondant à l'entraxe nominal entre deux traverses. Après arrêt de la machine, les deux groupes de têtes sont déplacés verticalement le long des colonnes 45 jusqu'à ce que les clés 34 viennent coiffer les boulons 7. Si le positionnement des clés par rapport aux boulons est relativement satisfaisant, c'est-à-dire si la clé peut venir coiffer le boulon malgré une légère excentration, les moteurs des têtes de serrage 18 sont mis en fonctionnement. Il se produit alors, en raison de la "rigidification" de l'articulation obtenue grâce aux axes croisés 35, un réalignement éventuel des arbres d'entraînement 30 qui seraient désaxés par rapport aux boulons correspondants. Ce réalignement se traduit par un déplacement des bâtis 14 portant les deux groupes de têtes de serrage par rapport au châssis 8. Ce réalignement est rendu possible grâce aux ressorts 45 situés d'un côté et en raison du fait que le vérin 48 situé de l'autre côté est dans une position dans laquelle ces deux chambres communiquent.

S'il apparaît de temps en temps qu'une traverse est trop décalée pour que les têtes de serrage viennent coiffer les boulons correspondants, l'opérateur peut agir sur le vérin 48 pour déplacer le groupe 17 correspondant et l'amener au-dessus des boulons 7. L'autre groupe de têtes retombe en position de serrage grâce aux ressorts antagonistes 45, comme expliqué précédemment. En fin de travail, au moment où les deux têtes remontent, le vérin 48 ramène, par un automatisme électro-hydraulique, le bâti 14 correspondant en position centrale.

S'il apparaissait un décalage encore plus important ne pouvant être compensé par déplacement des têtes, l'opérateur dispose d'une télécommande qui lui permet de modifier la position de l'ensemble de la machine.

Comme il ressort de ce qui précède, l'invention apporte une grande amélioration à la technique existante en fournissant une machine permettant de réaliser simultanément le serrage ou le desserrage de quatre boulons, qui est d'une structure et d'un fonctionnement simple et extrêmement fiable.

## Revendications

1. Machine de vissage ou de dévissage de boulons (7) ou de tire-fond pour attaches (6) vissées de voies ferrées, comportant quatre têtes de vissage (18) destinées à actionner simultanément les quatre boulons ou les quatre tire-fond destinés à assurer la fixation d'un rail sur une traverse (3), comprenant un châssis (8) doté d'un dispositif auto-moteur et équipé de galets (9) prenant appui sur les deux rails (4) de la voie ferrée, deux groupes (17) de deux têtes de vissage étant montés déplaçables verticalement sur le châssis, l'écartement de deux têtes d'un groupe pouvant être réglé, et chaque tête de vissage comportant une clé (34) d'engagement sur un boulon ou un tire-fond, **caractérisée en ce que** :
- le dispositif auto-moteur assure un déplacement séquentiel du châssis d'une valeur correspondant à l'écartement nominal entre les traverses, chacun des galets équipant ledit châssis étant muni d'un bandage réalisé en un matériau évitant le patinage et le glissement dudit galet sur le rail qui lui sert d'appui,
- chaque groupe de deux têtes de vissage est monté avec possibilité de déplacement longitudinal sur le châssis,
- chaque clé est montée de façon inclinable par rapport à l'axe de la tête.

2. Machine selon la revendication 2, **caractérisée en ce que** le châssis (8) comporte quatre galets (9), munis chacun d'un bandage réalisé dans un matériau par exemple à base de caoutchouc, entraînés à partir d'un moteur thermique, un capteur constitué par un compteur d'impulsions (13) étant prévu à l'intérieur de la machine, qui arrête la machine lorsque celle-ci s'est déplacée d'une distance déterminée.

3. Machine selon la revendication 2, **caractérisée en ce que** la valeur du déplacement de la machine entre deux cycles de serrage de boulons est réglable à l'aide d'une télécommande actionnable par l'opérateur.

4. Machine selon l'une quelconque des revendications 1 à 3, **caractérisée en ce que** chaque tête de vissage (18) comprend une clé (34) dont l'ouverture présente une entrée conique (36) et est montée sur l'arbre d'entraînement correspondant par l'intermédiaire d'un dispositif (35) à rotule.

5. Machine selon l'une quelconque des revendications 1 à 4, **caractérisée en ce que** chaque groupe (17) de deux têtes de vissage (18) est monté sur un bâti (14), lui-même monté coulissant longitudinalement sur le châssis (8) de la machine.

6. Machine selon la revendication 5, **caractérisée en ce qu'**au moins un des groupes (17) de têtes de vissage (18) est maintenu auto-centré longitudinalement sous l'action de deux ressorts antagonistes (45) agissant chacun entre le châssis (8) de la machine et le bâti (14) porteur d'un groupe (17) de têtes de vissage (18).

7. Machine selon la revendication 5, **caractérisée en ce qu'**au moins un des groupes (17) de têtes de vissage (18) est associé à un vérin hydraulique (48) monté entre le châssis (8) de la machine et le bâti (14) porteur d'un groupe de têtes de vissage, ce vérin (48) étant équipé d'un distributeur à centre ouvert le laissant libre en conditions normales d'utilisation de la machine, et pouvant commander l'alimentation en fluide hydraulique de l'une ou l'autre des deux chambres pour réaliser le positionnement longitudinal du groupe (17) de têtes de vissage (18), sur initiative de l'opérateur, si les têtes sont trop décalées par rapport aux écrous à serrer.

8. Machine selon la revendication 7, **caractérisée en ce que** lorsque le vérin hydraulique (48) a été actionné pour réaliser le positionnement longitudinal d'un groupe (17) de têtes de vissage, le vérin est ramené par un automatisme électro-hydraulique en position centrale, en fin de vissage, lors de la remontée des têtes de vissage (18).

9. Machine selon les revendications 6 à 8, **caractérisée en ce qu'**elle comporte, d'un côté, un groupe (17) de têtes de vissage (18) maintenu auto-centré à l'aide de ressorts (45) et, de l'autre côté, un groupe de têtes de vissage associé à un vérin hydraulique (48) de positionnement.

10. Machine selon l'une des revendications 1 à 9, **caractérisée en ce qu'**elle comporte en outre un chariot (22), solidaire du châssis (8) de la machine et disposé en avant de celui-ci, équipé de moyens de positionnement avec précision, des traverses (3) sur lesquelles les rails doivent être fixés.

11. Machine selon la revendication 10, **caractérisée en ce que** les moyens de positionnement des traverses sont constitués par des pinces et/ou des leviers (26) actionnés hydrauliquement permettant de pousser ou de tirer la traverse (3) située sous le chariot.

12. Machine selon l'une des revendications 10 et 11, **caractérisée en ce que** le chariot (22) comporte des moyens (25) de bridage sur les rails, en période de positionnement d'une traverse.

## Patentansprüche

1. Maschine zum Festschrauben oder Losschrauben von Bolzen (7) oder Schwellenschrauben für geschraubte Halterungen (6) von Schienenwegen, mit vier Schraubköpfen (18), die zur gleichzeitigen Betätigung der vier Bolzen oder der vier Schwellenschrauben dienen und die Befestigung einer Schiene auf einer Schwelle (3) gewährleisten, mit einem Fahrgestell (8), das mit einer selbstfahrenden Vorrichtung versehen ist und mit Rollen (9) ausgestattet ist, die auf den beiden-Schienen (4) des Schienenweges abgestützt sind, wobei zwei Gruppen (17) mit zwei Schraubköpfen auf dem Fahrgestell vertikal verschiebbar montiert sind, wobei die Beabstandung zweier Köpfe dieser Gruppe eingestellt werden kann und wobei jeder Schraubkopf einen Schlüssel (34) für den Eingriff mit einem Bolzen oder einer Schwellenschraube aufweist, **dadurch gekennzeichnet, dass**:
- die selbstfahrende Vorrichtung eine sequentielle Verschiebung des Fahrgestells um einen Wert ermöglicht, welcher der nominalen Beabstandung zwischen den Schwellen entspricht, wobei jede der Rollen am Fahrgestell mit einem Band ausgestattet ist, das aus einem Material besteht, welches das Durchdrehen und das Rutschen der Rolle auf der ihr als Auflage dienenden Schiene verhindert;
- jede Gruppe aus zwei Schraubköpfen mit einer Möglichkeit der Längsverschiebung auf dem Fahrgestell montiert ist; und
- jeder Schlüssel bezüglich der Achse des Kopfes neigbar montiert ist.

2. Maschine nach Anspruch 1, **dadurch gekennzeichnet, dass** das Fahrgestell (8) vier Rollen (9) aufweist, die jeweils mit einem Band versehen sind, das aus einem Material z.B. auf Kautschuk-Basis besteht und von einem Thermomotor angetrieben wird, wobei ein durch einen Impulszähler (13) gebildeter Sensor im Innern der Maschine vorgesehen ist, der die Maschine anhält, wenn sie sich um eine vorbestimmte Entfernung verschoben hat.

3. Maschine nach Anspruch 2, **dadurch gekennzeichnet, dass** der Wert der Verschiebung der Maschine zwischen zwei Festschraub-Zyklen mit Hilfe einer durch einen Bediener betätigbaren Fernbedienung einstellbar ist.

4. Maschine nach einem der Ansprüche 1 bis 3, **dadurch gekennzeichnet, dass** jeder Schraubkopf (18) einen Schlüssel (34) aufweist, dessen Öffnung einen konischen Eingang (36) hat und der auf der entsprechenden Antriebswelle über eine Kugelgelenk-Vorrichtung (35) montiert ist.

5. Maschine nach einem der Ansprüche 1 bis 4, **dadurch gekennzeichnet, dass** jede Gruppe (17) aus zwei Schraubköpfen (18) auf einem Rahmen (14) montiert ist, der seinerseits in Längsrichtung gleitend auf dem Fahrgestell (8) der Maschine montiert ist.

6. Maschine nach Anspruch 5, **dadurch gekennzeichnet, dass** mindestens eine der Gruppen (17) aus Schraubköpfen (18) unter der Einwirkung zweier entgegengesetzt wirkender Federn (45) in der Längsrichtung selbstzentriert gehalten wird, die jeweils zwischen dem Fahrgestell (8) der Maschine und dem Tragrahmen (14) einer Gruppe (17) aus Schraubköpfen (18) wirken.

7. Maschine nach Anspruch 5, **dadurch gekennzeichnet, dass** mindestens eine der Gruppen (17) aus Schraubköpfen (18) einem Hydraulikzylinder (48) zugeordnet ist, der zwischen dem Fahrgestell (8) der Maschine und dem Tragrahmen (14) einer Gruppe von Schraubköpfen montiert ist, wobei dieser Zylinder (48) mit einem Verteiler mit offenem Zentrum ausgestattet ist, um ihn unter normalen Nutzungsbedingungen dieser Maschine freizulassen, und der die Versorgung der einen oder der anderen der beiden Kammern mit Hydraulikfluid steuern kann, um die Positionierung der Gruppe (17) aus Schraubköpfen (18) in der Längsrichtung auf Initiative des Bedieners zu bewirken, falls die Köpfe bezüglich der festzuziehenden Muttern zu sehr versetzt sind.

8. Maschine nach Anspruch 7, **dadurch gekennzeichnet, dass** dann, wenn der Hydraulikzylinder (48) betätigt worden ist, um die Positionierung einer Gruppe (17) aus Schraubköpfen in der Längsrichtung zu bewirken, der Zylinder durch einen elektrohydraulisch Automatismus am Ende des Schraubens während des Hochfahrens der Schraubköpfe (18) in die mittige Stellung zurückgebracht wird.

9. Maschine nach einem der Ansprüche 6 bis 8, **dadurch gekennzeichnet, dass** sie auf der einen Seite eine Gruppe (17) aus Schraubköpfen (18) aufweist, die mit Hilfe von Federn (45) selbstzentriert gehalten werden, und auf der anderen Seite eine Gruppe aus Schraubköpfen aufweist, die einem Hydraulikzylinder (48) zur Positionierung zugeordnet ist.

10. Maschine nach einem der Ansprüche 1 bis 9, **dadurch gekennzeichnet, dass** sie außerdem einen mit dem Fahrgestell (8) der Maschine verbundenen und vor ihr angeordneten Wagen (22) aufweist, der mit Mitteln zur präzisen Positionierung der Schwellen (3) ausgestattet ist, auf denen die Schienen befestigt werden müssen.

11. Maschine nach Anspruch 10, **dadurch gekennzeichnet, dass** die Mittel zur Positionierung der Schwellen durch Zangen und/oder Hebel (26) gebildet sind, die hydraulisch betätigt werden und es ermöglichen, an der unter dem Wagen befindlichen Schwelle (3) zu drücken oder an ihr zu ziehen.

12. Maschine nach einem der Ansprüche 10 und 11, **dadurch gekennzeichnet, dass** der Wagen (22) Mittel (25) zum Festklammern auf den Schienen während des Positionierens einer Schwelle aufweist.

## Claims

1. Apparatus for screwing or unscrewing the bolts (7) or sleeper-screws of railway track screwed fasteners (6), including four screwing heads (18) which are intended to act simultaneously on the four bolts or the four sleeper-screws for fixing a rail on a sleeper (3), comprising a chassis (8) with a self-propelled device and equipped with rollers (9) which bear on the two rails (4) of the railway track, two sets (17) of two screwing heads being mounted so that they can be displaced vertically on the chassis, it being possible to regulate the gap between the two heads of a set, and each screwing head including a key (34) for acting on a bolt or sleeper-screw, **characterized in that**:
- the self-propelled device ensures that the chassis is displaced sequentially by a value which corresponds to the nominal gap between the sleepers, each of the rollers with which the said chassis is equipped being fitted with a tyre of a material which prevents the said roller from spinning and slipping on the rail on which it bears,
- each set of two screwing heads is mounted with the possibility of longitudinal displacement on the chassis,
- each key is mounted so that it can be tilted in relation to the axis of the head.

2. Apparatus according to Claim 1, **characterized in that** the chassis (8) carries four rollers (9), each fitted with a tyre of a material based on, for instance, rubber, driven from a heat engine, a sensor which consists of a pulse counter (13), and which stops the apparatus when it has been displaced by a preset distance, being provided inside the apparatus.

3. Apparatus according to Claim 2, **characterized in that** the value of the displacement of the apparatus between two bolt-tightening cycles can be regulated by means of a remote control which the operator can operate.

4. Apparatus according to any of Claims 1 to 3, **characterized in that** each screwing head (18) includes a key (34) of which the opening has a conical entry (36) and is mounted on the corresponding drive shaft through a device (35) with a ball-and-socket joint.

5. Apparatus according to any of Claims 1 to 4, **characterized in that** each set (17) of two screwing heads (18) is mounted on a frame (14), which is itself mounted so that it slides longitudinally on the chassis (8) of the apparatus.

6. Apparatus according to Claim 5, **characterized in that** at least one of the sets (17) of screwing heads (18) is kept self-centred longitudinally by the action of two opposing springs (45), each of which acts between the chassis (8) of the apparatus and the frame (14) on which a set (17) of screwing heads (18) is mounted.

7. Apparatus according to Claim 5, **characterized in that** at least one of the sets (17) of screwing heads (18) is associated with a hydraulic jack (48) which is mounted between the chassis (8) of the apparatus and the frame (14) on which a set of screwing heads is mounted, this jack (48) being equipped with a control valve with an open centre leaving it free in the normal conditions of use of the apparatus, and being able to control the supply of hydraulic fluid to one or the other of the two chambers to position the set (17) of screwing heads (18) longitudinally, on the operator's initiative, if the heads are too offset in relation to the nuts to be tightened.

8. Apparatus according to Claim 7, **characterized in that** when the hydraulic jack (48) has been actuated to position a set (17) of screwing heads longitudinally, the jack is brought back by an automatic electro-hydraulic mechanism to the central position, at the end of screwing, when the screwing heads (18) are raised.

9. Apparatus according to Claims 6 to 8, **characterized in that** it includes, on one side, a set (17) of screwing heads (18) which is kept self-centred with the help of springs (45), and on the other side, a set of screwing heads which is associated with a hydraulic positioning jack (48).

10. Apparatus according to one of Claims 1 to 9, **characterized in that** it also includes a trolley (22) which is integral with the chassis (8) of the apparatus, arranged in front of it, and equipped with means for precise positioning of the sleepers (3) to which the rails must be fixed.

11. Apparatus according to Claim 10, **characterized in that** the means for positioning the sleepers consist of grippers and/or levers (26) which are actuated hydraulically, making it possible to push or pull the sleeper (3) situated below the trolley.

12. Apparatus according to either of Claims 10 and 11, **characterized in that** the trolley (22) carries means (25) for clamping onto the rails while a sleeper is being positioned.
